Europäisches Patentamt

European Patent Office

Office européen des brevets

(19)

(11) Veröffentlichungsnummer: **0 181 316 B1**

## (12) EUROPÄISCHE PATENTSCHRIFT

(45) Veröffentlichungstag der Patentschrift: **04.12.91**

(51) Int. Cl.$^5$: **H04M 7/14**

(21) Anmeldenummer: **85890239.8**

(22) Anmeldetag: **27.09.85**

(54) **Schaltungsanordnung für Fernsprechnetze.**

(30) Priorität: **05.10.84 AT 3167/84**

(43) Veröffentlichungstag der Anmeldung:
**14.05.86 Patentblatt 86/20**

(45) Bekanntmachung des Hinweises auf die
Patenterteilung:
**04.12.91 Patentblatt 91/49**

(84) Benannte Vertragsstaaten:
**BE DE GB IT NL SE**

(56) Entgegenhaltungen:
**EP-A- 0 099 128**
**FR-A- 2 457 608**
**US-A- 4 373 118**

(73) Patentinhaber: **Alcatel Austria Aktiengesellschaft
Scheydgasse 41
A-1210 Wien(AT)**

(72) Erfinder: **Naiwirt, Erich
Bussardgasse 9
A-1210 Wien(AT)**

## Beschreibung

Die Erfindung bezieht sich auf eine Schaltungsanordnung für Fernsprechnetze, zum Übertragen von Wechselstromsignalen von einer nachgeschalteten Sprechanlage zu einer speisenden Vermittlungsstelle, wobei ein Übertrager vorgesehen ist, der auf der Seite der speisenden Vermittlungsstelle von einem Strompfad für den in den beiden Leitungen derselben fließenden Gleichstrom überbrückt ist.

Bisher werden in Fernsprechnetzen zur Sprachsignalübertragung von untergeordneten Sprechanlagen auf eine über-geordnete, speisende Vermittlungsstelle Transformatoren verwendet, die sowohl vom Sprachsignal als auch von dem in der speisenden Vermittlungsstelle zur Übertragung vermittlungstechnischer Kennzeichen vorhandenen Gleichstrom durchflossen werden. Diese Transformatoren sind auf Grund der an die Qualität der Signalübertragung gestellten Anforderungen verhältnismäßig groß, schwer und teuer. Durch Serienschaltung mit einem Kondensator ist es möglich, den Übertrager vom Gleichstrom der speisenden Vermittlungsstelle und damit von der Vormagnetisierung durch diesen zu befreien. Dadurch kann der Übertrager verkleinert werden, allerdings in einem relativ begrenzten Ausmaß, weil er weiterhin die gesamte Sendesignalenergie in Richtung auf die speisende Vermittlungsstelle übertragen muß.

Außerdem ist es bei der bekannten Schaltung erforderlich, zur Aufrechterhaltung des Gleichstromflusses in der Leitung der übergeordneten Vermittlungsstelle den Übertrager und den Kondensator durch einen Strompfad für den Gleichstrom zu überbrücken. Hiezu wird eine Spule verwendet, die eine verhältnismäßig große Induktivität aufweisen muß und einen zusätzlichen Schaltungsaufwand verursacht. Außerdem ist es bekannt, für den Strompfad eine elektronische Schaltungsanordnung mit einem Transistor zu verwenden, der durch entsprechende Beschaltung eine Impedanz bildet und so den Gleichstromfluß ermöglicht. Auch diese Transistorschaltung erfordert einen erheblichen Schaltungsaufwand, ohne eine wesentliche Verkleinerung des Übertragers zu ermöglichen.

So ist beispielsweise aus der US-PS 4,373,118 eine Schaltungsanordnung bekannt, bei der ein Transistor mit dem Kollektor und dem Emitter zwischen die Leitungen der speisenden Vermittlungsstelle geschaltet ist und dadurch einen Gleichstromweg für den Schleifenstrom bildet. Der Übertrager ist parallel dazu, jedoch gleichstrommäßig durch einen Kondensator getrennt angeschaltet. Der Übertrager arbeitet dadurch zwar gleichstromfrei, muß jedoch das gesamte Wechselstromsignal übertragen und muß somit immer noch relativ groß dimensioniert sein.

Aus der FR-PS 2 457 608 ist eine Schaltungsanordnung bekannt, in der der Übertrager zur Steuerung eines Verstärkers verwendet wird, wobei der Verstärkertransistor auch als Weg für den Schleifenstrom verwendet wird. Dieser extern gesteuerte Gyrator zeigt jedoch eine sehr aufwendige Lösung bei der sowohl die Gleichstrom - als auch die Wechselstromimpedanz kaum veränderbare Werte aufweisen.

Der Erfindung liegt die Aufgabe zu Grunde, die bisher bekannten Schaltungsanordnungen so zu verbessern, daß mit geringem Schaltungsaufwand und unter Verwendung eines möglichst kleinen Übertragers sowohl der Gleichstrom - als auch der Wechselstromabschlußwiderstand der Schaltung unabhängig voneinander einstellbar sind.

Diese Aufgabe wird erfindungsgemäß dadurch gelöst, daß zwischen die beiden Leitungen der speisenden Vermittlungsstelle ein aus zwei Widerständen gebildeter Spannungsteiler eingeschaltet ist, dessen Mittelpunkt über einen Vorwiderstand mit der Basis des Transistors verbunden ist. Der Übertrager braucht nur den Basisstrom für die Ansteuerung des Transistors zu liefern, der als Gyrator arbeitet und ein verstärktes Sprachsignal abgibt. Dadurch ist eine weitgehende Verkleinerung des Übertragers möglich, ohne daß die Qualität der Signalübertragung beeinträchtigt wird.

Durch den Spannungsteiler und den Vorwiderstand wird die Größe des Steuerstromes bestimmt, mit dem die Basis des Transistors angesteuert wird. Es kann also durch Wahl der Größe der einzelnen Widerstände der Abschlußwiderstand der erfindungsgemäßen Schaltungsanordnung gegenüber der speisenden Vermittlungsstelle und damit die Größe des jeweils fließenden Stromes eingestellt werden.

Wenn nach einem weiteren Merkmal der Erfindung zwischen den Mittelpunkt des Spannungsteilers und die mit dem Emitter des Transistors verbundene Leitung der speisenden Vermittlungsstelle ein Kondensator eingeschaltet ist, kann durch entsprechende Wahl der Kapazität des Kondesators auch der Wechselstromanteil zur Ansteuerung der Basis des Transistors eingestellt werden. Es ist damit möglich, sowohl den Gleichstrom- als auch den Wechselstromabschlußwiderstand der Schaltungsanordnung unabhängig voneinander zu wählen.

In weiterer Ausgestaltung der erfindungsgemäßen Schaltungsanordnung kann der Übertrager auf der Seite der nachgeschalteten Sprechanlage im Kurzschluß angeschaltet sein. Diese im Rahmen der Erfindung mögliche Maßnahme erlaubt eine weitere Vereinfachung der Schaltungsanordnung.

Die beiden Leitungen der speisenden Vermittlungsstelle können über einen Gleichrichter an die Schaltungsanordnung angeschlossen sein, wodurch der Eingang der Schaltungsanordnung von der Polarität

EP 0 181 316 B1

des Gleichstroms in den Leitungen der übergeordneten speisenden Vermittlungsstelle unabhängig wird. Die Schaltungsanordnung wird dadurch vor Beschädigungen durch falsche Polung geschützt.

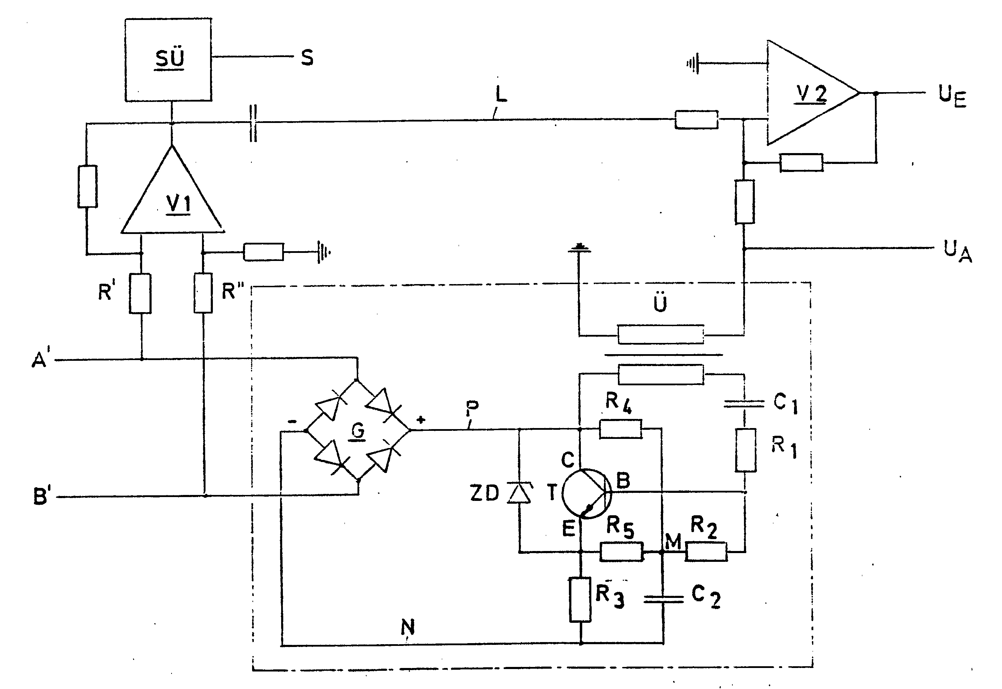

Weitere Einzelheiten und Vorteile der Erfindung sind aus der nachfolgenden Beschreibung eines Ausführungsbeispiels an Hand der Zeichnung zu entnehmen, in der die erfindungsgemäße Schaltungsanordnung als Teil eines Fernsprechnetzes dargestellt ist.

In der Zeichnung sind die Leitungen einer übergeordneten speisenden Vermittlungsstelle mit A' und B' bezeichnet. Das über diese Leitungen A',B' als Wechselstrom ankommende Sprachsignal wird über zwei hochohmige Widerstände R' und R" von einem Verstärker V1 abgenommen, an den eine Schleifenüberwachung SÜ angeschaltet ist, die über einen Ausgang S meldet, ob die übergeordnete Vermittlungsstelle über die Leitungen A' und B' speist. Das von den Leitungen A' und B' als Zweidrahtsignal abgenommene ankommende Sprachsignal wird über eine Leitung L einem weiteren Verstärker V2 zugeführt, von dem es in das erdbezogene Eingangssignal $U_E$ umgewandelt wird. Das abgehende Sendesignal $U_A$ wird mit Hilfe der erfindungsgemäßen Schaltungsanordnung, die in der Zeichnung durch eine strichpunktierte Umrandung gekennzeichnet ist, auf die beiden Leitungen A' und B' der speisenden Vermittlungsstelle übertragen.

Das abgehende Sendesignal $U_A$, das gleichfalls erdbezogen ist, wird über einen Übertrager Ü galvanisch getrennt in die Schaltungsanordnung übertragen. Diese Schaltungsanordnung ist über einen Brückengleichrichter G mit den Leitungen A' und B' der speisenden Vermittlungsstelle verbunden. Zwischen die beiden Gleichspannungsausgänge P und N des Gleichrichters G ist außerdem ein von einem Transistor T gebildeter Verstärker eingeschaltet, der den Übertrager Ü überbrückt und einen Strompfad zwischen den beiden Leitungen A' und B' der speisenden Vermittlungsstelle bildet.

Der Transistor T ist mit dem Kollektor C mit der positiven Leitung P und mit dem Emitter E über einen Widerstand $R_3$ mit der negativen Leitung N des Gleichspannungsausganges des Gleichrichters G verbunden. Zum Schutz des Transistors T ist zwischen den Emitter E und den Kollektor C eine Zenerdiode ZD eingeschaltet. Die Basis B des Transistors T ist einerseits vom Übertrager Ü angesteuert, dessen Sekundärseite zwischen die positive Leitung P und die Basis B des Transistors T geschaltet ist, wobei zwischen der Basis B und dem Übertrager Ü ein Widerstand $R_1$ und ein Kondensator $C_1$, die in Serie geschaltet sind, vorgesehen sind. Anderseits ist der Transistor T von einem Spannu ngsteiler angesteuert, dessen Mittelpunkt M über einen Vorwiderstand $R_2$ mit der Basis B des Transistors T verbunden ist. Der Spannungsteiler ist von zwei Widerständen $R_4$ und $R_5$ gebildet und zwischen die positive Leitung P des Gleichrichters G und den Emitter E eingeschaltet, der über den Widerstand $R_3$ mit der negativen Leitung N in Verbindung steht. Außerdem ist der Mittelpunkt M des Spannungsteilers $R_4$, $R_5$ über einen Kondensator $C_2$ mit der negativen Leitung N des Gleichspannungsausgangs des Gleichrichters G verbunden.

Die Basis B des transistors T wird somit zweifach angesteuert. Der aus den Widerständen $R_4$ und $R_5$ gebildete Spannungsteiler und der Vorwiderstand $R_2$ bestimmen den Gleichstromwiderstand der Schaltungsanordnung in Bezug auf die Leitungen A' und B' und damit den durch den vom Transistor T gebildeten Strompfad fließenden Gleichstrom. Durch Wahl der Größe der Widerstände $R_4$ und $R_5$ des Spannungsteilers und des Vorwiderstandes $R_2$ können somit der Gleichstromwiderstand der Schaltungsanordnung und der fließende Gleichstrom geändert und eingestellt werden. Die Größe des Gleichstromwiderstandes ist vom Speisestrom abhängig und sinkt mit zunehmendem Speisestrom. Der Gleichstromwiderstand $R_{A'B'}$ ergibt sich dabei aus der Formel

$$R_{A'B'} = R_3 + \frac{U_{BE} \cdot \left(1 + \dfrac{R_4}{R_5}\right) + U_{BG}}{I_{A'B'}} \, ,$$

in der mit $U_{BE}$ die Basis-Emitterspannung des Transistors T, mit $U_{BG}$ der Spannungsabfall am Brückengleichrichter G und mit $I_{A'B'}$ der in den Leitungen A' und B' fließende Strom bezeichnet ist.

Die Wechselstromimpedanz der Schaltungsanordnung ergibt sich aus der Ansteuerung der Basis B des Transistors T über die Widerstände $R_1$ und $R_2$, da der Wechselstromwiderstand der beiden Kondensatoren $C_1$ und $C_2$ praktisch vernachläßigbar klein ist. Der Mittelpunkt M des Spannungsteilers $R_4$,$R_5$ leigt deshalb praktisch auf einer virtuellen Erde. Es kommt an der Basis B des Transistors T über die Widerstände $R_1$ und $R_2$ zu einer Aussteuerung, da die Wechselstromimpendanz zwischen dem Mittelpunkt M und dem Kollektor C des Transistors T, also zwischen den Leitungen A' und B' der übergeordneten Vermittlungsstelle, sehr niederohmig ist, im Vergleich zum übrigen Schaltungsnetzwerk mit den hochohmigen Widerständen

3

EP 0 181 316 B1

R$_1$ und R$_2$. Es kann somit eine idealisierte Aussteuerung an der Basis B des Transistors T über von den Widerständen R$_1$ und R$_2$ gebildeten Spannungsteiler angenommen werden. Demnach kann die Wechselstromimpendanz Z$_{A'B'}$, zwischen den beiden Leitungen A' und B' der Schaltungsanordnung aus der Formel

$$Z_{A'B'} = R_3 \cdot \left( 1 + \frac{R_1}{R_2} \right)$$

berechnet werden, wobei vorausgesetzt ist, daß der Basisstrom des Transistrors T vernachläßigbar klein ist.

Bei der beschriebenen Schaltungsanordnung ist es also möglich, den Gleichstromwiderstand und die Wechselstromimpedanz in Bezug auf die beiden Leitungen A' und B' der übergeordneten speisenden Vermittlungsstelle weitgehend unabhängig voneinander einzustellen, so daß allen diesbezüglichen Anforderungen der Praxis unschwer entsprochen werden kann.

In einer praktischen Ausführung kann das Schaltungsnetzwerk der erfindungsgemäßen Schaltungsanordnung beispielsweise wie folgt bemessen sein:

$R_1 = 10\ kOhm$    $R_4 = 10\ kOhm$    $C_1 = 1\ \mu F$

$R_2 = 1,3\ kOhm$    $R_5 = 3,3\ kOhm$    $C_2 = 10\ \mu F$

$R_3 = 68\ Ohm$

$I_{A'B'} = 25\ mA$

$\underline{\underline{R_{A'B'} = 212\ Ohm}}$    $\underline{\underline{Z_{A'B'} = 600\ Ohm}}$

Die beschriebene Schaltungsanordnung arbeiter in folgender Weise: Das abgehende Sendesignal U$_A$ wird dem Übertrager Ü, der auf der Primärseite im Kurzschlußbetrieb arbeitet, zugeführt und von diesem als Steuersignal an die Basis B des Transistors T weitergeleitet. Der Transistor T arbeitet als Verstärker und gibt das abgehende Sendesignal als verstärktes Wechselstromsignal auf die Leitungen A' und B' der übergeordneten Vermittlungsstelle weiter. Der in den Leitungen A' und B' fließende Gleichstrom wird über den Brückengleichrichter G, der den Schaltungseingang polaritäts unabhängig macht, der Schaltungsanordnung zugeführt. Dieser Gleichstr om steuert gleichfalls die Basis B des Transistors T über den aus den Widerständen R$_4$ und R$_5$ gebildet Spannungsteiler und über den Vorwiderstand R$_2$ an, so daß der Transistors T einen Strompfad für den Gleichstrom bildet.

Es ist somit die Übertragung und Weiterleitung des abgehenden Sendesignals von der nachgeschalteten Sprechanlage zur speisenden Vermittlungsstelle und zugleich die Gleichstromspeisung sichergestellt. Da die Verstärkung des Transistors T vergleichsweise hoch gewählt werden kann, geht der Großteil des Stromes der zwischen den beiden Leitungen A' und B' fließt, durch den Transistor T hindurch. Der Übertrager Ü kann vergleichsweise sehr klein gehalten werden, weil nur ein kleiner Strom für die Ansteuerung der Basis B des Transistors T erforderlich ist. Die beschriebene Schaltungsanordnung zeichnet sich deshalb auch durch einen kleinen Schaltungsaufwand und durch geringe Abmessungen der erforderlichen Bauteile aus.

**Patentansprüche**

1. Schaltungsanordnung für Fernsprechnetze, zum Übertragen von Wechselstromsignalen von einer nachgeschalteten Sprechanlage zu einer speisenden Vermittlungsstelle, wobei ein Übertrager vorgesehen ist, der auf der Seite der speisenden Vermittlungsstelle von einem Transistor überbrückt ist, der mit dem Kollektor (C) und dem Emitter (E) zwischen die Leitungen (A', B') der speisenden Vermittlungsstelle eingeschaltet ist, wobei der Übertrager (Ü) zwischen den Kollektor (C) und die Basis (B) des

4

Transistors (T) geschaltet ist und der Transistor (T) vom Gleichstrom der speisenden Vermittlungsstelle und vom Wechselstrom des Übertragers (Ü) angesteuert und sein Durchgangswiderstand in Abhängigkeit von den Steuersignalen veränderbar ist, **dadurch gekennzeichnet,** daß zwischen die beiden Leitungen (A', B') der speisenden Vermittlungsstelle ein aus zwei Widerständen ($R_4$, $R_5$) gebildeter Spannungsteiler eingeschaltet ist, dessen Mittelpunkt (M) über einen Vorwiderstand ($R_2$) mit der Basis (B) des Transistors (T) verbunden ist.

2. Schaltungsanordnung nach Anspruch 1, dadurch gekennzeichnet, daß zwischen den Mittelpunkt (M) des Spannungsteilers ($R_4$,$R_5$) und die mit dem Emitter (E) des Transistors (T) verbundene Leitung der speisenden Vermittlungsstelle ein Kondensator ($C_2$) eingeschaltet ist.

3. Schaltungsanordnung nach Anspruch 1 oder 2, dadurch gekennzeichnet, daß der Übertrager (Ü) auf der Seite der nachgeschalteten Sprechanlage im Kurzschluß angeschaltet ist.

4. Schaltungsanordnung nach einem der Ansprüche 1 bis 3 dadurch gekennzeichnet, daß der Transistor (T) unter Zwischenschaltung eines Gleichrichters (G) an die beiden Leitungen (A',B') der speisenden Vermittlungsstelle angeschlossen ist.

**Claims**

1. Circuit arrangement for telephone systems for the transmission of alternating current signals from a subsequent telephone system to a supplying exchange, whereby a signal transformer is provided with a bypass consisting of a transistor (T) which is inserted between the two lines (A',B') of the supplying exchange with its emitter (E) and collector (C) whereby the signal transformer (Ü) is inserted between collector (C) and base (B) of the transistor (T) and the transistor (T) is controlled by the direct current of the supplying exchange and the alternating current of the signal transformer (Ü), whereby its resistance changes according to the control signals, **characterized in that** a voltage divider consisting of the two resistors ($R_4$, $R_5$) is inserted between the two lines (A', B') of the supplying exchange whose centre (M) is connected with the base (B) of the transistor (T) via a series resistor ($R_2$) .

2. Circuit arrangement according to claim 1, **characterized in that** a capacitor ($C_2$) is inserted between the centre (M) of the voltage divider ($R_4$, $R_5$) and the line of the supplying exchange which is connected with the emitter (E) of the transistor (T) .

3. Circuit arrangement according to any of the claims 1 or 2, **characterized in that** the signal transformer (Ü) is shorted at the side of the subordinate telephone system.

4. Circuit arrangement according to any of the claims 1 through 3, **characterized in that** the amplifier (T) is connected with the two lines (A', B') of the supplying exchange, whereby a rectifier bridge (G) is inserted.

**Revendications**

1. Agencement de circuit pour réseaux de télécommunication pour le transfert de signaux en courant alternatif d'une station téléphonique raccordée vers un autocommutateur d'alimentation, comportant un transformateur qui, du côté de l'autocommutateur d'alimentation, est shunté par un transistor avec son collecteur (C) et son émetteur (E) raccordés entre les fils (A', B') de l'autocommutateur d'alimentation, dans lequel le transformateur (Ü) est connecté entre le collecteur (C) et la base (B) du transistor (T) et dans lequel le transistor (T) est piloté par le courant continu de l'autocommutateur d'alimentation et le courant alternatif du transformateur (Ü) et dont la résistance directe est susceptible de varier en fonction des signaux de pilotage, caractérisé en ce qu'un diviseur de tension composé de deux résistances ($R_4$, $R_5$) est connecté entre les deux fils (A', B') de l'autocommutateur d'alimentation, le point central (M) dudit diviseur de tension étant connecté à la base (B) du transistor (T) via une résistance amont ($R_2$).

2. Agencement de circuit selon la revendication 1, caractérisé en ce qu'un condensateur ($C_2$) est connecté entre le point central (M) du diviseur de tension ($R_4$, $R_5$) d'une part, et le fil de l'autocommutateur d'alimentation qui est connecté à l'émetteur (E) du transistor (T) d'autre part.

3. Agencement de circuit selon la revendication 1 ou 2, caractérisé en ce que le transformateur (Ü), du côté de la station téléphonique raccordée, est connecté en parallèle avec celle-ci.

4. Agencement de circuit selon l'une des revendications 1 à 3, caractérisé en ce que le transistor (T) est connecté aux deux fils (A', B') de l'autocommutateur d'alimentation à travers un redresseur (G).